# EUROPÄISCHE PATENTSCHRIFT

(11) **EP 3 740 409 B1**
(45) Veröffentlichungstag und Bekanntmachung des Hinweises auf die Patenterteilung: **22.02.2023**
(21) Anmeldenummer: 19714124.5
(22) Anmeldetag: 14.03.2019
(51) Int. Cl.: B61H 13/02, B60T 7/10, G05G 1/02, B61C 17/04, B61C 17/00

(54) **SCHIENENFAHRZEUG UND VERFAHREN ZUM BETREIBEN EINES SCHIENENFAHRZEUGS**
RAIL VEHICLE AND METHOD FOR OPERATING A RAIL VEHICLE
VÉHICULE FERROVIAIRE ET PROCÉDÉ DE FONCTIONNEMENT D'UN VÉHICULE FERROVIAIRE

(30) Priorität: 14.03.2018 DE 102018203861
(43) Veröffentlichungstag der Anmeldung: 25.11.2020
(73) Patentinhaber: Siemens Mobility GmbH, 81739 München (DE)
(72) Erfinder: GRZONA, Andreas, 47638 Straelen (DE); KRAUSE, Martin, 47495 Rheinberg (DE)
(86) Internationale Anmeldenummer: PCT/EP2019/056363
(87) Internationale Veröffentlichungsnummer: WO 2019/175291

(56) Entgegenhaltungen:
- WO-A2-2008/012112
- GB-A- 1 510 398

## Beschreibung

Es wird ein Schienenfahrzeug mit einem druckluftbetätigten Bremssystem angegeben. Darüber hinaus wird ein Verfahren zum Betreiben eines solchen Schienenfahrzeugs angegeben.

Die Druckschrift WO 2017/129317 A1 betrifft ein Schienenfahrzeug. Aus der Druckschrift DE 102 03 972 A1 sind ein Verfahren und eine Vorrichtung zur Überprüfung von Bremsen eines Zugs bekannt. Eine Drucküberwachungseinrichtung für eine Hauptluftleitung eines Zugs findet sich in der Druckschrift DE 20 2006 015 627 U1. Die Druckschrift WO 2008/012112 A2 offenbart ein Zugbremssteuerungssystem mit einem Notbremsschlagtaster, welcher mechanisch mit einem Entlüftungsventil gekoppelt ist. Das Entlüftungsventil ist wiederum mit einer Hauptluftleitung verbunden, welches bei einer Betätigung des Notbremsschlagtasters in eine offene Stellung die Hauptluftleitung entlüftet. Aus der Druckschrift GB 1 510 398 A ist ferner eine manuell bedienbare Notbremsventileinrichtung für die Entlüftung einer Hauptluftleitung eines Schienenfahrzeugs bekannt.

In modernen Triebzügen und lokbespannten Reisezügen wird ein Notbremswunsch eines Fahrgastes bzw. die Betätigung eines Notbremshebels oder -knopfes durch einen Fahrgast oder Zugbegleiter dem Fahrzeugführer im Führerstand angezeigt. Dieser entscheidet anschließend abhängig von der aktuellen Fahrsituation darüber, eine Notbremsung einzuleiten oder nicht. Die Einleitung einer Notbremsung durch den Fahrzeugführer erfolgt üblicherweise durch eine schnelle Druckreduzierung in der Hauptluftleitung, welche im Vergleich zu einer normalen Betriebsbremse zu einer verstärkten Betätigung der druckluftgesteuerten Reibungsbremsen an den Radachsen bzw. Rädern der Wagen des Zugs führt, um hierdurch einen kürzest möglichen Bremsweg zu erzielen. Die Reduzierung des Drucks in der Hauptluftleitung erfolgt durch ein so genanntes Notbremsventil, welches von dem Fahrzeugführer mittels eines im Führerstandpult angeordneten Tasters betätigt wird. Der Taster ist dabei für eine sichere und verlässliche Bedienung unmittelbar mit dem Ventil verbunden. Entsprechend wird das Ventil üblicherweise unmittelbar unterhalb des Tasters bzw. im Inneren des Führerstandpults angeordnet, sodass die Hauptluftleitung aufwändig bis zum Ventil geführt werden muss. Da ein Entlüften der Hauptluftleitung im Führerstand üblicherweise nicht möglich ist, wird zudem eine weitere Luftleitung vorgesehen, mittels der die Abluft aus dem Führerstand an die Umgebung abgegeben werden kann.

Eine zu lösende Aufgabe liegt darin, ein Schienenfahrzeug anzugeben, in dem in einem Führerstand eine Hauptluftleitung zur Betätigung einer Bremse des Schienenfahrzeugs platzsparend ansteuerbar ist.

Diese Aufgabe wird durch ein Schienenfahrzeug sowie ein Verfahren zum Betreiben eines Schienenfahrzeugs gemäß den unabhängigen Patentansprüchen gelöst. Bevorzugte Weiterbildungen sind Gegenstand abhängiger Patentansprüche.

Erfindungsgemäß umfasst das Schienenfahrzeug eine Hauptluftleitung. Die Hauptluftleitung ist dazu eingerichtet, unter Druck zu stehen, beispielsweise unter einem Druck zwischen 3,5 bar und 10 bar, sprich, in der Hauptluftleitung herrscht ein Luftdruck zwischen 3,5 bar und 10 bar. Die Hauptluftleitung ist pneumatisch mit einem Bremssystem des Schienenfahrzeugs verbunden. Das Bremssystem umfasst bevorzugt mehrere Bremsen, die insbesondere mechanisch auf Räder oder Radsätze des Schienenfahrzeugs einwirken können.

Erfindungsgemäß umfasst das Schienenfahrzeug ein Ventil. Das Ventil befindet sich an der Hauptluftleitung, bevorzugt direkt an der Hauptluftleitung. Über das Ventil kann die Hauptluftleitung geöffnet und/oder geschlossen werden. Geöffnet bedeutet insbesondere, dass die Hauptluftleitung zur Umgebungsluft hin offen ist, sodass an der Öffnung der Hauptluftleitung dann ein Druck von ungefähr 1 bar herrscht.

Erfindungsgemäß umfasst das Schienenfahrzeug einen Führerstand für einen Schienenfahrzeugbediener. Bei dem Schienenfahrzeugbediener handelt es sich insbesondere um einen Lokführer oder Triebfahrzeugführer. Der Führerstand ist zum Beispiel in einer Lokomotive, in einem Triebfahrzeug oder in einem Steuerwagen untergebracht.

Erfindungsgemäß umfasst das Schienenfahrzeug in dem Führerstand einen Taster. Der Taster ist zum Öffnen und/oder Schließen der Hauptluftleitung mittels des Ventils durch den Schienenfahrzeugbediener eingerichtet. Durch Betätigen des Tasters wird damit das Bremssystem angesteuert. Insbesondere wird durch den Taster die Hauptluftleitung geöffnet und etwa eine Notbremsung ausgelöst. Der Taster kann ähnlich einem Notausschalter gestaltet sein und insbesondere ein Druckknopf sein, bevorzugt ein Rückschlagtaster.

Erfindungsgemäß umfasst das Schienenfahrzeug eine Koppelvorrichtung. Über die Koppelvorrichtung sind das Ventil und der Taster mechanisch direkt miteinander verbunden. Mechanisch bedeutet in diesem Zusammenhang insbesondere, dass die Koppelvorrichtung weder pneumatisch noch hydraulisch arbeitet, sondern vollständig aus Feststoffen gebildet ist. Erfindungsgemäß sind der Taster und das Ventil voneinander beabstandet. Dies bedeutet insbesondere, dass sich das Ventil nicht unmittelbar an dem Taster befindet. Ein Abstand zwischen dem Taster und dem Ventil beträgt bevorzugt mindestens 0,5 m oder 0,7 m und/oder höchstens 5 m oder 3 m oder 2 m. Der Abstand kann ein minimaler Abstand zwischen dem Taster und dem Ventil sein und/oder ein Abstand entlang der Koppelvorrichtung. Der Abstand entlang der Koppelvorrichtung kann größer sein als der minimale Abstand, speziell falls die Koppelvorrichtung nicht entlang einer Geraden verläuft. Erfindungsgemäß umfasst das Schienenfahrzeug somit eine Hauptluftleitung, die pneumatisch mit einem Bremssystem des Schienenfahrzeugs verbunden ist. Ein Ventil befindet sich an der Hauptluftleitung. Ein Führerstand ist für einen Schienenfahrzeugbediener vorgesehen. In dem Führerstand befindet sich ein Taster zum Öffnen und/oder Schließen der Hauptluftleitung mittels des Ventils durch den Schienenfahrzeugbediener zum Ansteuern des Bremssystems. Das Ventil und der Taster sind voneinander beabstandet und über eine Koppelvorrichtung mechanisch direkt miteinander verbunden.

Im Führerstand eines Zuges, insbesondere eines Hochgeschwindigkeitszuges, muss die Hauptluftleitung mit dem Taster, speziell dem Rückschlagtaster, in einem Führerstandpult mechanisch fest und sicher verbunden sein. Eine elektronische Steuerleitung ist aufgrund von Sicherheitsanforderungen nicht zulässig. Üblicherweise ist hierzu die Hauptluftleitung durch den gesamten Führerstand und ein Führerstandpult gelegt und direkt unterhalb einer Bedienoberfläche mit dem Taster verbunden. Dafür müssen üblicherweise zwei Rohre der Hauptluftleitung mit dem Taster verbunden werden. Da die Hauptluftleitung einen vergleichsweise großen Durchmesser aufweisen muss, hat der Taster zusammen mit dem Ventil und den Rohren eine unhandliche Größe, die vergleichsweise viel Platz unterhalb des Führerstandpultes oder im Führerstandpult beansprucht. Bei dem hier beschriebenen Schienenfahrzeug ist der Taster durch eine direkte mechanische Kopplung wie eine Stange mit der an einer anderen Stelle befindlichen Ventil an Hauptluftleitung verbunden. Dies erfüllt den Anspruch einer direkten unfehlbaren Verbindung zwischen dem Taster und der Hauptluftleitung und ermöglicht eine Platzierung des durch den Taster zu bedienenden Ventils zum Schlie-βen und/oder Öffnen der Hauptluftleitung an anderer Stelle, sodass die Hauptluftleitung nicht mehr durch den Führerstand geführt werden muss.

Dadurch sind kleinere Taster oder Tastermodule erreichbar. Hierdurch ist eine erhebliche Platzersparnis im Führerstandpult ermöglicht, sodass mehr Raum für andere Komponenten zur Verfügung steht. Dies ermöglicht konstruktive Freiheiten bei der Gestaltung des Führerstandpults und der Führung der Hauptluftleitung, die nicht mehr durch das Führerstandpult gelegt werden muss.

Gemäß zumindest einer Ausführungsform wird beim Betätigen des Tasters die Koppelvorrichtung direkt an dem Taster um mindestens 10 mm oder 20 mm und/oder um höchstens 150 mm oder 100 mm oder 60 mm bewegt. Das heißt, beim Betätigen des Tasters überträgt sich eine Bewegung des Tasters bevorzugt direkt auf die Koppelvorrichtung.

Die Koppelvorrichtung kann sich um die gleiche Strecke bewegen wie der Taster, insbesondere ohne Übersetzung oder Getriebe. Beim Bedienen können der Taster und die Koppelvorrichtung die gleiche Bewegungsrichtung aufweisen.

Erfindungsgemäß umfasst die Koppelvorrichtung eine starre Stange oder besteht aus einer starren Stange. Starr bedeutet, dass sich die Stange im bestimmungsgemäßen Gebrauch nicht oder nicht signifikant verformt. Beispielsweise ist die Stange eine Metallstange aus einem Stahl oder aus Aluminium. Alternativ zu einem Metall können auch andere starre Materialien wie faserverstärkte Kunststoffe für die Stange verwendet werden. Ein mittlerer Durchmesser der Stange liegt bevorzugt bei mindestens 1 mm oder 2 mm und/oder bei höchstens 5 mm oder 3 mm.

Gemäß zumindest einer Ausführungsform umfasst die Koppelvorrichtung höchstens fünf oder zwei Gelenke oder ein Gelenk. Alternativ oder zusätzlich weist die Koppelvorrichtung mindestens ein Gelenk oder mindestens zwei Gelenke auf. Über ein Gelenk lässt sich eine Bewegungsrichtung der Koppelvorrichtung effizient ändern. Es ist möglich, dass die Koppelvorrichtung frei von Gelenken ist.

Gemäß zumindest einer Ausführungsform weist die Koppelvorrichtung eine oder mehrere Biegungen auf. An der zumindest einen Biegung, die auch als Knick gestaltet sein kann, erfolgt bevorzugt eine Richtungsänderung von mindestens 15° oder 30° oder 45° oder 60° oder 85°. Die Biegung oder der Knick können über ein Gelenk realisiert sein oder durch eine Biegung oder einen Knick in einem ansonsten durchgehenden, starren Material.

Erfindungsgemäß ist die Koppelvorrichtung durch eine starre und gerade Stange, insbesondere eine Metallstange, gebildet, die einerseits mit dem Taster und andererseits mit dem Ventil starr verbunden ist. Die Stange ist somit bevorzugt an dem Taster und an dem Ventil unbeweglich befestigt und löst sich im bestimmungsgemäßen Gebrauch nicht von diesen.

Erfindungsgemäß ist die Hauptluftleitung unter einem Boden des Führerstands und/oder unter einem Sitz für den Schienenfahrzeugbediener verlegt. Damit kann ein für den Schienenfahrzeugbediener vorgesehener Innenraum des Führerstands frei von der Hauptluftleitung sein. Insbesondere überschreitet die Hauptluftleitung in dem Führerstand ein Bodenniveau nicht in Richtung hin zu einem Raum für den Schienenfahrzeugbediener. Somit ist ein Bereich unterhalb des Bodens des Führerstands komplett frei von der Hauptluftleitung. Über die Koppelvorrichtung wird dann eine mechanisch unmittelbare Verbindung zwischen Taster im Führerstand und Ventil an der Hauptluftleitung außerhalb des Führerstands geschaffen.

Gemäß zumindest einer Ausführungsform ist die Koppelvorrichtung in einem Schutzgehäuse untergebracht und/oder befindet sich zumindest eine mechanische Führung an der Koppelvorrichtung. Über eine mechanische Führung lässt sich ein Verlauf der Koppelvorrichtung exakt definieren und es lassen sich über die Koppelvorrichtung vergleichsweise große Strecken zurücklegen.

Bei dem Schutzgehäuse handelt es sich beispielsweise um ein Gehäuse für ein Gestänge oder um einen Mantel um ein Seil eines Bowdenzuges. Im letztgenannten Fall kann das Schutzgehäuse mechanisch flexibel gestaltet sein. Alternativ ist das Schutzgehäuse mechanisch starr. Ein mittlerer Außendurchmesser des Schutzgehäuses und/oder der mechanischen Führung und/oder der Koppelvorrichtung liegt bevorzugt bei höchstens 20 mmm oder 10 mm oder 5mm. Damit kann ein Außendurchmesser des Schutzgehäuses und/oder der mechanischen Führung und/oder der Koppelvorrichtung signifikant kleiner sein als ein Außendurchmesser der Hauptluftleitung, der üblicherweise bei mindestens 27 mm und/oder bei höchstens 70 mm liegt.

Gemäß zumindest einer Ausführungsform handelt es sich bei dem Schienenfahrzeug um einen Hochgeschwindigkeitszug. Eine bestimmungsgemäße Maximalgeschwindigkeit des Schienenfahrzeugs beträgt dann bevorzugt mindestens 200 km/h.

Gemäß zumindest einer Ausführungsform befinden sich in dem Führerstand mehrere der Taster. Über jeden der Taster ist die Hauptluftleitung zu öffnen und/oder zu schließen. Jedem der Taster ist beispielsweise ein eigenes Ventil und/oder eine eigene Koppelvorrichtung zugeordnet. Beispielsweise besteht zwischen den Tastern, den Koppelvorrichtungen sowie den Ventilen eine eineindeutige Zuordnung. Alternativ ist pro Taster genau eine Koppelvorrichtung und nur ein Ventil in der Hauptluftleitung vorgesehen, welches von jeder der Koppelvorrichtungen betätigt werden kann.

Darüber hinaus wird ein Betriebsverfahren für ein Schienenfahrzeug angegeben. Mit dem Verfahren wird ein Schienenfahrzeug betrieben, wie es in Verbindung mit einer oder mehrerer der oben genannten Ausführungsformen beschrieben ist. Merkmale des Verfahrens sind daher auch für das Schienenfahrzeug offenbart und umgekehrt.

In mindestens einer Ausführungsform des Verfahrens wird der Taster zum teilweisen oder vollständigen Öffnen der Hauptluftleitung verwendet. Durch ein Betätigen des Tasters und ein dadurch hervorgerufenes Öffnen des Ventils erfolgt in der Hauptluftleitung ein Druckabfall, der zur Betätigung des Bremssystems führt. Damit kann der Taster für eine Notbremsung des Schienenfahrzeugs vorgesehen sein.

Insbesondere ist der Taster lediglich zu einem vollständigen Öffnen und/oder einem vollständigen Schließen der Hauptluftleitung eingerichtet. Das heißt, über den Taster lässt sich bestimmungsgemäß die Hauptluftleitung nicht definiert teilweise öffnen oder schließen. Insofern handelt es sich bei dem Taster dann um eine An/Aus-Vorrichtung und nicht um eine weitergehende, feiner unterteilte Stellvorrichtung, über die eine Bremskraft dosiert einstellbar ist.

Nachfolgend werden unter Bezugnahme auf die Zeichnung ein hier beschriebenes Schienenfahrzeug und ein hier beschriebenes Verfahren näher erläutert. Gleiche Bezugszeichen geben dabei gleiche Elemente in den verschiedenen Figuren an. Es sind dabei jedoch keine maßstäblichen Bezüge zwischen den einzelnen Elementen dargestellt, vielmehr können einzelne Elemente zum besseren Verständnis übertrieben groß dargestellt sein.

Es zeigen:
- Figuren 1 und 2: schematische perspektivische Darstellungen einer Abwandlung eines Ausschnitts eines Schienenfahrzeugs,
- Figuren 3 und 4: schematische perspektivische Darstellungen eines Ausführungsbeispiels eines Ausschnitts eines hier beschriebenen Schienenfahrzeugs,
- Figuren 5 bis 8: ausschnittsweise schematische Schnittdarstellungen in Längsrichtung von Ausführungsbeispielen von hier beschriebenen Schienenfahrzeugen, und
- Figur 9: eine ausschnittsweise schematische Schnittdarstellung in Querrichtung eines Ausführungsbeispiels eines hier beschriebenen Schienenfahrzeugs.

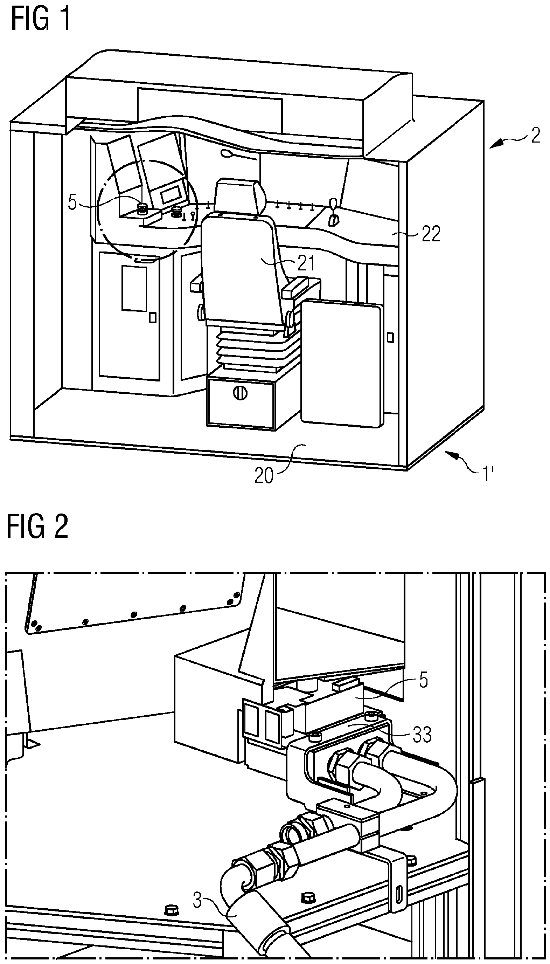

In Figur 1 ist ein Beispiel eines herkömmlichen Führerstandes eines Schienenfahrzeugs illustriert. Das Schienenfahrzeug 1' weist in einem Führerstand 2 einen Sitz 21 für einen Schienenfahrzeugbediener auf. In Reichweite des Schienenfahrzeugbedieners von dem Sitz 21 aus befindet sich auf einem Führerstandpult 22 ein Rückschlagtaster 5. Durch Betätigen des Rückschlagtasters 5 wird eine Bremsung, insbesondere eine Notbremsung des Schienenfahrzeugs 1', ausgelöst.

Dazu ist der Rückschlagtaster 5 unmittelbar mit einem Ventil 33 verbunden, siehe Figur 2. Das Ventil 33 befindet sich direkt an einer Hauptluftleitung 3 des Schienenfahrzeugs 1', welche zu einem Bremssystem des Schienenfahrzeugs führt. Durch Betätigen des Rückschlagtasters 5 erfolgt eine unmittelbare mechanische Einwirkung auf das Ventil 33, sodass das Ventil 33 geöffnet und das Bremssystem des Schienenfahrzeugs 1' betätigt wird.

Da sich der Rückschlagtaster 5 samt dem Ventil 33 auf Arbeitshöhe in einem Führerstandpult 22 befindet, ist die Hauptluftleitung 3 im Wesentlichen durch das gesamte Führerstandpult 22 hindurchgeführt. Hierdurch ergibt sich ein signifikanter zusätzlicher Platzbedarf in dem Führerstandpult 22, da aufgrund gesetzlicher Vorschriften die Hauptluftleitung 3 einen vergleichsweise großen Durchmesser aufweisen muss und nur relativ große Biegeradien zulässig sind. Aufgrund dessen sind gemäß Figur 2 zu dem Rückschlagtaster 5 hin im Führerstandpult 22 massive Rohre verlegt.

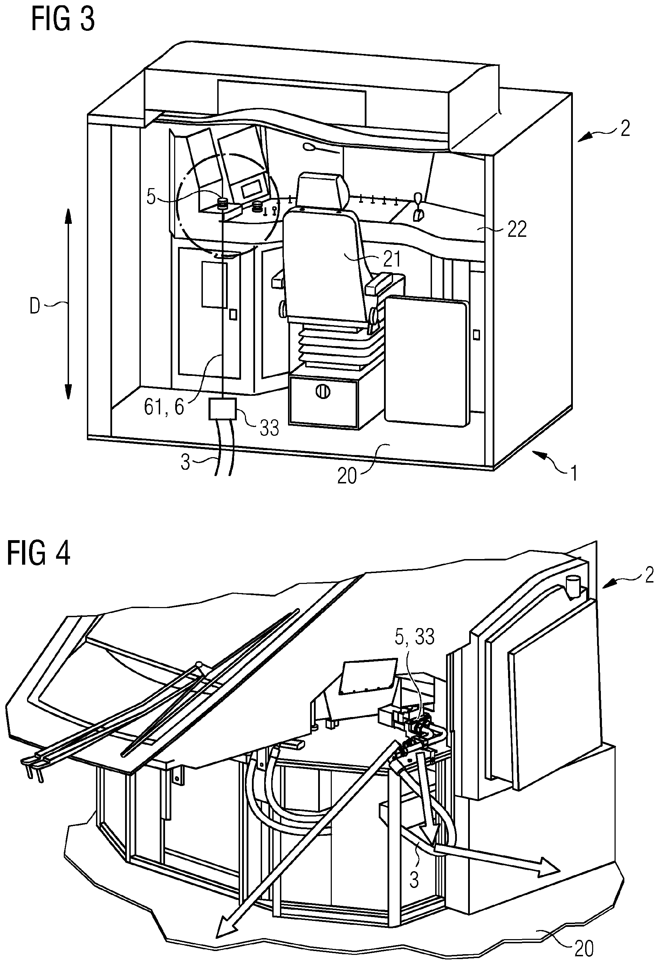

Im Ausführungsbeispiel der Figur 3 ist dagegen illustriert, dass der Rückschlagtaster 5 über eine Koppelvorrichtung 6 mit dem Ventil 33 an einer Hauptluftleitung 3 verbunden, welche sich unterhalb oder an einem Boden 20 des Führerstands 2 befindet. Die Koppelvorrichtung 6 ist beispielsweise durch eine starre Metallstange 61 gebildet. Das Ventil 33 befindet ebenfalls unterhalb oder an einem Boden 20 des Führerstands 2. Über die Metallstange 61 ist eine feste, unmittelbare mechanische Kopplung zwischen dem Rückschlagtaster 5 und dem Ventil 33 erzielt. Entlang der Koppelvorrichtung 6 beträgt ein Abstand D zwischen dem Ventil 33 und dem Rückschlagtaster 5 ungefähr 1 m. Die Stange 61 nimmt erheblich weniger Platz in Anspruch als eine im Führerstandpult 22 verlegte Hauptluftleitung 3.

Die Platzersparnis im Führerstandpult ist ergänzend in Figur 4 veranschaulicht. Mit der hier beschriebenen Anordnung ist es möglich, das Ventil 33 sowie die Hauptluftleitung 3 aus dem Führerstandpult weg und beispielsweise unter den Boden 20 des Führerstands 2 zu verlegen. Dies ist in Figur 4 durch die Pfeile symbolisiert. Die Hauptluftleitung 3 und das Ventil 33 sind aufgrund der Koppelvorrichtung 6 in einen Bereich unterhalb des Führerstandpults einbaubar, insbesondere in einen Unterflurbereich oder in einen Bugnasenbereich des Schienenfahrzeugs 1. Alternativ kann eine Positionierung des Ventils 33 auch nur in den Fußbereich des Führerstandpults noch oberhalb des Bodens 20 erfolgen.

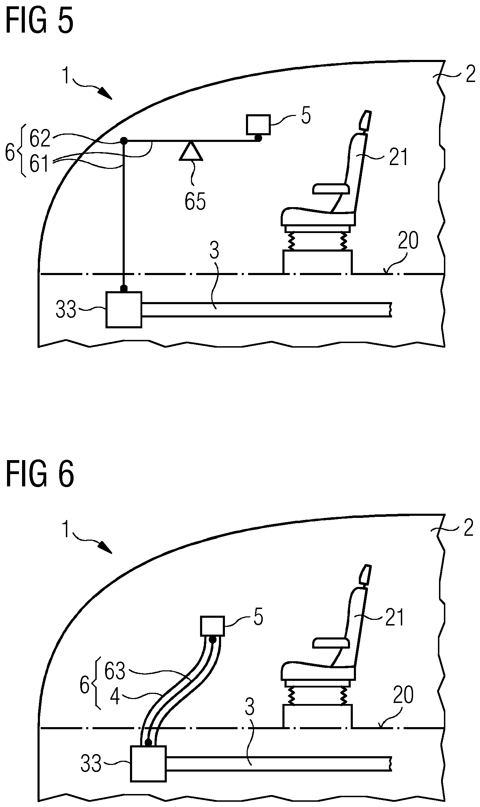

Beim Ausführungsbeispiel der Figur 5, dargestellt in einer Schnittdarstellung längs einer Fahrtrichtung des Schienenfahrzeugs 1, ist die Koppelvorrichtung 6 durch zwei starre Stangen 61 gebildet, die über ein Gelenk 62 fest aneinander gekoppelt sind. Es ist möglich, dass ein Auflager 65 vorhanden ist, das sich an einer der Stangen 61 befindet.

Anders als in Figur 3 ist es somit nicht nötig, dass die Koppelvorrichtung 6 entlang einer geraden Linie verläuft. Durch die Stangen 61, das Gelenk 62 und das optionale Auflager 65 ist jedoch immer noch eine feste, unmittelbare mechanische Kopplung zwischen dem Rückschlagtaster 5 und dem Ventil 33 gegeben.

Beim Ausführungsbeispiel nicht gemäß der vorliegenden Erfindung der Figur 6 ist die Koppelvorrichtung 6 durch einen Seilzug 63 zusammen mit einem Schutzgehäuse 4 gebildet. Es handelt sich dabei bei der Koppelvorrichtung 6 bevorzugt um einen sogenannten Bowdenzug. Die Koppelvorrichtung 6 kann damit auch gebogen in dem Führerstand 2 verlegt werden.

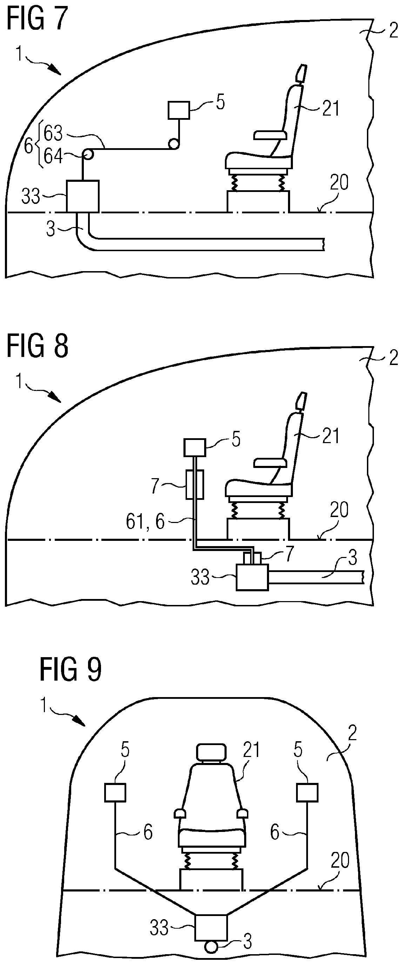

In Figur 7 nicht gemäß der vorliegenden Erfindung ist dargestellt, dass die Koppelvorrichtung 6 durch den Seilzug 63 gebildet ist, der über Umlenkrollen 64 geführt ist. Auch hierdurch ist eine Koppelvorrichtung 6 erzielbar, die in mehreren geraden Abschnitten verlaufen kann. In allen vorgenannten Ausführungsbeispielen ist es möglich, dass das Ventil 33 oberhalb des Bodens 20 angebracht ist. Dies ermöglicht beispielsweise eine vereinfachte Wartung und Zugänglichkeit des Ventils 33.

Im Ausführungsbeispiel der Figur 8 ist dargestellt, dass sich an der Koppelvorrichtung 6, beispielsweise als abgewinkelte Stange 61 realisiert, mehrere mechanische Führungen 7 befinden. Es ist möglich, dass die Stange 61 lediglich an den Führungen 7 sowie am Ventil 33 und an dem Rückschlagtaster 5 definiert mechanisch gelagert ist und ansonsten frei verläuft. Durch die Führungen 7 ist eine stabile und sichere Lagerung der Stange 61 der Koppelvorrichtung 6 erzielbar.

Wie in allen anderen Ausführungsbeispielen ist es möglich, dass von einer Spitze des Schienenfahrzeugs 1 aus und in Seitenansicht gesehen die Hauptluftleitung 3 unterhalb oder hinter dem Sitz 21 endet. Damit lässt sich eine weitere Platzersparnis erzielen, da die Hauptluftleitung 3 vergleichsweise weit von der Spitze des Schienenfahrzeugs 1 entfernt enden kann.

In Figur 9 ist illustriert, dass mehrere Rückschlagtaster 5 vorhanden sind. Jeder der Rückschlagtaster 5 ist bevorzugt über eine eigene Koppelvorrichtung 6 mit dem Ventil 33 verbunden. Abweichend von der Darstellung in Figur 9 kann für jede Koppelvorrichtung 6 ein eigenes Ventil 33 an der Hauptluftleitung 3 vorhanden sein.

Weiter ist es abweichend von Figur 9 möglich, dass die Hauptluftleitung 3 im Querschnitt senkrecht zur Fahrtrichtung gesehen nicht mittig in dem Schienenfahrzeug 1 angeordnet ist, sondern ausmittig. Entsprechend können die Koppelvorrichtungen 6 asymmetrisch zu einer Mittelachse verlaufen, im Querschnitt senkrecht zur Fahrrichtung des Schienenfahrzeugs 1 gesehen.

## Patentansprüche

1. Schienenfahrzeug (1) mit
- einer Hauptluftleitung (3), die pneumatisch mit einem Bremssystem des Schienenfahrzeugs (1) verbunden ist,
- einem Ventil (33) an der Hauptluftleitung (3),
- einem Führerstand (2) für einen Schienenfahrzeugbediener,
- einem Taster (5) in dem Führerstand (2) zum Öffnen und/oder Schließen der Hauptluftleitung (3) mittels des Ventils (33) durch den Schienenfahrzeugbediener zum Ansteuern des Bremssystems, und
- einer Koppelvorrichtung (6), über die das Ventil (33) und der Taster (5) mechanisch direkt miteinander verbunden sind, sodass der Taster (5) und das Ventil (33) voneinander beabstandet sind,
**dadurch gekennzeichnet, dass**
die Koppelvorrichtung (6) durch eine starre, gerade Stange gebildet ist und die Stange starr an dem Taster (5) und an dem Ventil (33) befestigt ist,
die Hauptluftleitung (3) unter einem Boden (20) des Führerstands (2) und/oder unter einem Sitz (21) für den Schienenfahrzeugbediener verläuft, sodass ein für den Schienenfahrzeugbediener vorgesehener Innenraum des Führerstands (2) frei von der Hauptluftleitung (3) ist, und
eine Länge der Koppelvorrichtung (6) zwischen einschließlich 0,5 m und 2 m liegt.

2. Schienenfahrzeug (1) nach dem vorhergehenden Anspruch, bei dem ein Abstand (D) zwischen dem Ventil (33) und dem Taster (5) mindestens 0,5 m beträgt,
wobei beim Betätigen des Tasters (5) die Koppelvorrichtung (6) direkt an dem Taster (5) um mindestens 10 mm und um höchstens 100 mm bewegt wird.

3. Schienenfahrzeug (1) nach einem der vorhergehenden Ansprüche,
bei dem die Koppelvorrichtung (6) eine Metallstange umfasst oder hieraus besteht.

4. Schienenfahrzeug (1) nach einem der vorhergehenden Ansprüche,
bei dem die Koppelvorrichtung (6) höchstens zwei Gelenke (62) umfasst.

5. Schienenfahrzeug (1) nach einem der vorhergehenden Ansprüche,
bei dem die Koppelvorrichtung (6) mindestens eine Biegung mit einer Richtungsänderung von wenigstens 30° aufweist.

6. Schienenfahrzeug (1) nach einem der vorhergehenden Ansprüche,
bei dem die Koppelvorrichtung (6) in einem Schutzgehäuse (4) untergebracht ist,
wobei ein mittlerer Außendurchmesser des Schutzgehäuses (4) und/oder der Koppelvorrichtung (6) höchstens 10 mm beträgt, und
wobei die Hauptluftleitung (3) einen Außendurchmesser zwischen einschließlich 27 mm und 70 mm aufweist.

7. Schienenfahrzeug (1) nach einem der vorhergehenden Ansprüche,
das zumindest Teil eines Hochgeschwindigkeitszuges mit einer bestimmungsgemäßen Maximalgeschwindigkeit von mindestens 200 km/h ist,
wobei sich in dem Führerstand (2) mehrere der Taster (5) befinden, die jeweils über eine eigene Koppelvorrichtung (6) mit der Hauptluftleitung (3) verbunden sind.

8. Verfahren, mit dem ein Schienenfahrzeug (1) nach einem der vorherigen Ansprüche bedient wird,
wobei der Taster (5) zum vollständigen Öffnen der Hauptluftleitung (3) verwendet wird, sodass in der Hauptluftleitung (3) ein Druckabfall erfolgt, und
wobei der Taster (5) für eine Notbremsung des Schienenfahrzeugs (1) vorgesehen ist.

## Claims

1. Rail vehicle (1) having
- a main air line (3), which is connected pneumatically to a braking system of the rail vehicle (1),
- a valve (33) on the main air line (3),
- a driver's cab (2) for a rail vehicle operator,
- a push button (5) in the driver's cab (2) for the rail vehicle operator to open and/or close the main air line (3) by means of the valve (33) in order to control the braking system, and
- a coupling apparatus (6), by way of which the valve (33) and the push button (5) are connected mechanically directly with one another so that the push button (5) and the valve (33) are at a distance from one another,
**characterised in that**
the coupling apparatus (6) is formed by a rigid, straight rod and the rod is fastened in a rigid manner to the push button (5) and to the valve (33),
the main air line (3) runs below a floor (20) of the driver's cab and/or below a seat (21) for the rail vehicle operator, so that an interior of the driver's cab (2) which is provided for the rail vehicle operator is free of the main air line (3), and
a length of the coupling apparatus (6) lies between inclusively 0.5 m and 2 m.

2. Rail vehicle (1) according to the preceding claim, in which a distance (D) between the valve (33) and the push button (5) amounts to at least 0.5 m,
wherein when the push button (5) is actuated, the coupling apparatus (6) is moved directly on the push button (5) by at least 10 mm and by at most 100 mm.

3. Rail vehicle (1) according to one of the preceding claims,
in which the coupling apparatus (6) comprises a metal rod or consists thereof.

4. Rail vehicle (1) according to one of the preceding claims,
in which the coupling apparatus (6) comprises at most two articulated joints (62).

5. Rail vehicle (1) according to one of the preceding claims, in which the coupling apparatus (6) has at least one bend with a change in direction of at least 30°.

6. Rail vehicle (1) according to one of the preceding claims, in which the coupling apparatus (6) is accommodated in a protective housing (4),
wherein an average external diameter of the protective housing (4) and/or the coupling apparatus (6) amounts at most to 10 mm,
and
wherein the main air line (3) has an external diameter between inclusively 27 mm and 70 mm.

7. Rail vehicle (1) according to one of the preceding claims,
which is at least part of a high-speed train with a conventional maximum speed of at least 200 km/h,
wherein several of the push buttons (5) are located in the driver's cab (2) and are connected to the main air line (3) by way of a separate coupling apparatus (6) in each instance.

8. Method with which a rail vehicle (1) is operated according to one of the preceding claims,
wherein the push button (5) is used to fully open the main air line (3) so that a drop in pressure occurs in the main air line and
wherein the push button (5) is provided for an emergency braking of the rail vehicle (1).

## Revendications

1. Véhicule (1) comprenant
- un conduit (3) principal pour de l'air, qui communique pneumatiquement avec un système de freinage du véhicule (1) ferroviaire,
- une vanne (33) sur le conduit (3) principal pour de l'air,
- un poste (2) de conduite pour un opérateur du véhicule ferroviaire,
- une touche (5) dans le poste (2) de conduite pour l'ouverture et/ou la fermeture du conduit (3) principal pour de l'air au moyen de la vanne (33) par l'opérateur du véhicule ferroviaire, en vue de commander le système de freinage, et
- un système (6) de liaison par lequel la vanne (33) et la touche (5) sont reliées entre elles directement du point de vue mécanique, de manière à ce que la touche (5) et la vanne (33) soient à distance l'une de l'autre,
**caractérisé en ce que**
le système (6) de liaison est formé d'une barre rectiligne rigide et la barre est fixée rigidement à la touche (5) et à la vanne (33),
le conduit (3) principal pour de l'air s'étend sous un plancher (20) du poste (2) de conduite et/ou sous un siège (21) pour l'opérateur du véhicule ferroviaire, de manière à ce qu'un espace intérieur, prévu pour l'opérateur du véhicule, du poste (2) de conduite, soit exempt du conduit (3) principal pour de l'air, et une longueur du système (6) de liaison est comprise entre et 0,5 m et 2 m, les deux valeurs étant incluses.

2. Véhicule (1) ferroviaire suivant la revendication précédente, dans lequel une distance (D) entre la vanne (33) et la touche (5) est d'au moins 0,5 m,
dans lequel, lors de l'actionnement de la touche (5), on déplace le système (6) de liaison directement sur la touche (5) d'au moins 10 mm et d'au plus 100 mm.

3. Véhicule (1) ferroviaire suivant l'une des revendications précédentes,
dans lequel le système (6) de liaison comprend une barre métallique ou en est constitué.

4. Véhicule (1) ferroviaire suivant l'une des revendications précédentes,
dans lequel le système (6) de liaison comprend au plus deux articulations (62).

5. Véhicule (1) ferroviaire suivant l'une des revendications précédentes,
dans lequel le système (6) de liaison a au moins une courbure ayant une variation de direction d'au moins 30°.

6. Véhicule (1) ferroviaire suivant l'une des revendications précédentes,
dans lequel le système (6) de liaison est logé dans un boîtier (4) de protection,
dans lequel un diamètre extérieur moyen du boîtier (4) de protection et/ou du système (6) de liaison est de 10 mm au plus, et
dans lequel le conduit (3) principal pour de l'air a un diamètre extérieur compris entre 27 mm et 70 mm, les deux valeurs étant incluses.

7. Véhicule (1) ferroviaire suivant l'une des revendications précédentes,
qui est au moins une partie d'un train à grande vitesse ayant une vitesse maximum conforme aux prescriptions d'au moins 200 km/h, dans lequel il y a dans le poste (2) de conduite plusieurs des touches (5), qui sont reliées au conduit (3) principal pour de l'air respectivement par leur propre système (6) de liaison.

8. Procédé par lequel on peut commander un véhicule (1) ferroviaire suivant l'une des revendications précédentes,
dans lequel on utilise la touche (5) pour ouvrir complètement le conduit (3) principal pour de l'air, de manière à effectuer une chute de pression dans le conduit (3) principal pour de l'air, et dans lequel la touche (5) est prévue pour un freinage d'urgence du véhicule (1) ferroviaire.
